# EUROPÄISCHE PATENTSCHRIFT

(11) **EP 1 192 113 B1**
(45) Veröffentlichungstag und Bekanntmachung des Hinweises auf die Patenterteilung: **10.03.2004**
(21) Anmeldenummer: 00943720.3
(22) Anmeldetag: 17.05.2000
(51) Int. Cl.: C03C 25/26, C08J 5/08, C03C 25/40

(54) **SCHLICHTEZUSAMMENSETZUNG, BESCHLICHTETE GLASFASERN SOWIE DEREN VERWENDUNG**
SIZING COMPOSITION, SIZED GLASS FIBERS AND THEIR USE
COMPOSITION D'ENDUCTION, FIBRES DE VERRE ENDUITES ET LEUR UTILISATION

(30) Priorität: 28.05.1999 DE 19924671
(43) Veröffentlichungstag der Anmeldung: 03.04.2002
(73) Patentinhaber: Bayer Aktiengesellschaft, 51368 Leverkusen (DE); BAYER ANTWERPEN N.V., 2040 Antwerpen (BE)
(72) Erfinder: AUDENAERT, Raymond, B-9220 Hamme (BE); SIMON, Joachim, D-40589 Düsseldorf (DE); JOACHIMI, Detlev, D-47800 Krefeld (DE); KARBACH, Alexander, D-47800 Krefeld (DE)
(74) Vertreter: Feldhues, Michael L.F., Dr.
(86) Internationale Anmeldenummer: PCT/EP2000/004461
(87) Internationale Veröffentlichungsnummer: WO 2000/073235

(56) Entgegenhaltungen:
- US-A- 4 855 341
- US-A- 5 604 270
- US-A- 5 646 207

## Beschreibung

Die vorliegende Erfindung betrifft Schlichtezusammensetzungen, beschlichtete Glasfasern sowie ihre Verwendung.

Die Eigenschaften von Verbunden aus Glasfasern und Polymeren werden in hohem Maße von der Wechselwirkung zwischen Glasfaser und der die Glasfaser umgebenden Polymermatrix beeinflusst. Die Aufgabe der Schlichte besteht darin, den Verbund zwischen der Glasfaser und dem Matrixpolymer herzustellen und gleichzeitig die Herstell- und Verarbeitbarkeit der Glasfasern sicherzustellen. Als Schlichten werden Zusammensetzungen aus Wasser, polymeren Bindemitteln (den sogenannten Filmbildnern), Haftvermittlern, Gleitmitteln, Antistatika und weiteren Hilfsmitteln verwendet. Als Bindemittel verwendet man im allgemeinen organische, wasserdispergierbare oder - lösliche Polyvinylacetat-, Polyester-, Polyesterepoxid-, Polyurethan-, Polyacrylat-, Polyolefinharze oder deren Mischungen.

Allgemein werden Filmbildner und Haftvermittler so gewählt, dass eine Affinität zwischen der Polymermatrix und dem auf der Glasfaseroberfläche befindlichen Filmbildnern und/oder Haftvermittlern besteht und so ein mechanischer Verbund zwischen Glasfaser und Polymermatrix hergestellt wird.

Es versteht sich daher, dass die Rezepturen der Schlichten auf die jeweilige Polymermatrix optimiert werden müssen und dass die Eigenschaften der Verbunde empfindlich auf Veränderungen der Schlichtezusammensetzung reagieren.

Das bisher übliche Verfahren zur Herstellung von geschnittenen Glasfasern "Chopped Strand Verfahren", wie z.B. in "The Manufacturing Technology of Continuous Glass Fibres, Loewenstein, ISBN 0-444-42185-8 beschrieben, ist durch viele Zwischenschritte, bei denen die beschlichteten Glasfasern auf cakes gewickelt werden, anschließend getrocknet, evtl. zwischengelagert und danach wieder abgewickelt und geschnitten werden, sehr kostenaufwendig. Daher wird zur wirtschaftlichen Herstellung von geschnittenen Glasfasern das bekannte "Direct Chop Verfahren" angewendet, bei dem die beschlichtete Glasfaser nicht mehr auf cakes gewickelt wird, sondern unmittelbar nach dem Beschichten geschnitten wird, wie z.B. auch in "The Manufacturing Technology of Continuous Glass Fibres, Loewenstein, ISBN 0-444-42185-8 beschrieben. Dieses Verfahren zeichnet sich besonders durch seine wirtschaftliche Herstellungsweise aus.

Nachteil dieses Verfahrens ist, dass die mechanischen Verstärkungseigenschaften der im "Direct Chop Verfahren" hergestellten Glasfasern aus bisher nicht verstandenen Gründen um ca. 15-20 % niedriger liegen als die der Glasfasern, die mit den gleichen Schlichterezepturen nach dem konventionellen "Chopped Strand Verfahren" hergestellt werden.

Aufgabe der vorliegenden Erfindung war es daher, Glasfasern zur Verfügung zu stellen, die unabhängig vom Verfahren zur Herstellung geschnittener Glasfasern gleich gute Eigenschaften, insbesondere mechanische und thermische Eigenschaften, im Polymerverbund aufweisen. Insbesondere sollten die Eigenschaften der mit dem "Direct Chop Verfahren" hergestellten Glasfasern im Polymerverbund nicht schlechter sein als die Eigenschaften der mit den "Chopped Strand Verfahren" hergestellten Glasfasern im Polymerverbund.

Diese Aufgabe konnte überraschenderweise durch die erfindungsgemäßen Schlichtezusammensetzungen gelöst werden, die neben Filmbildnern, Amino- und/oder Epoxysilanen und weiteren üblichen Schlichtebestandteilen wasserlösliche oder dispergierbare, polymere oder mindestens oligomere aminofunktionelle Silanverbindungen enthalten.

Gegenstand der Erfindung sind Schlichtezusammensetzungen für Glasfasern mit einem pH-Wert zwischen 3 und 10 bestehend aus
a) 0,1 bis 20 Gew.-%, bevorzugt 4 bis 10 Gew.-% Polyepoxid-, Polyether-, Polyolefin-, Polyvinylacetat-, Polyacrylat- oder Polyurethanharzen oder Mischungen davon als Filmbildner,
b) 0,1 bis 10 Gew.-%, bevorzugt 0,3 bis 2 Gew.-% monomeren organofunktionellen Silanen mit einer Alkoxysilangruppe pro Molekül mit ein, zwei oder drei Alkoxyresten (Alkoxy ist bevorzugt C₁-C₆-Alkoxy und C₅-C₁₀-Cycloalkoxy) als Haftvermittler,
c) 0,1 bis 10 Gew.-%, bevorzugt 0,3 bis 2 Gew.-% wasserlöslichen oder -dispergierbaren, oligomeren oder polymeren aminofunktionellen Silanverbindungen mit mehr als einer Alkoxysilangruppe pro Molekül mit jeweils ein, zwei oder drei Alkoxyresten pro Silangruppe (Alkoxy ist bevorzugt C₁-C₆-Alkoxy und C₅-C₁₀-Cycloalkoxy) und einem mittleren Molekulargewicht von > 500 g/mol,
d) 0 bis 10 Gew.-%, bevorzugt 0,1 bis 5 Gew.-% weiteren üblichen Schlichtebestandteilen und
e) 0 bis 10 Gew.-%, bevorzugt 0 bis 5 Gew.-% Zusätzen zur Einstellung des pH-Wertes zwischen 3 und 10 und
f) Wasser als Rest auf 100 Gew. %.

Bevorzugt ist das Verhältnis von Komponente b) zu Komponente c) 2:1.

Bevorzugt wird der pH-Wert der Schlichte auf pH 5-9 eingestellt. Besonders bevorzugt ist ein pH Wert von 7. Zur Einstellung des pH-Wertes können die üblichen organischen oder anorganischen Säuren oder Basen eingesetzt werden. Bevorzugt wird als Säure Ameisensäure eingesetzt.

Die Verwendung von oligomeren Alkoxysilanen wird z.B. in US 3746738 (Union Carbide, Pepe et al.) für Glaslaminate und in US 4244844 (Saint-Gobain, Molinier et al.) speziell für Textilien in stärkehaltigen Schlichtezusammensetzungen beschrieben, die sich aufgrund der bedingten Thermostabilität von Stärke im allgemeinen nicht für die Verarbeitung von thermoplastischen Kunststoffen bei Verarbeitungstemperaturen > 100°C eignen.

Ein weiterer Gegenstand der Erfindung sind beschlichtete Glasfasern, die mit dem getrockneten Rückstand der erfindungsgemässen Schlichtezusammensetzungen überzogen sind.

Die erfindungsgemäßen, beschlichteten Glasfasern werden zur Verstärkung von thermoplastischen und duroplastischen Polymeren verwendet.

Zur Herstellung der erfindungsgemässen, beschlichteten Glasfasern sind alle für die Glasseiden-fabrikation verwendeten, bekannten Glastypen, wie E-, A-, C- und S-Glas geeignet. Unter den genannten Glastypen für die Herstellung von Endlosglasfasern besitzen die E-Glasfasem aufgrund ihrer Alkalifreiheit, ihrer hohen Zugfestigkeit und ihrem hohen Elastizitätsmodul die größte Bedeutung für die Verstärkung von Kunststoffen.

Zur Beschlichtung der Glasfasern werden diese nach bekannten Verfahren mit der erfindungsgemäßen Schlichte aus:
a) 0,1 bis 20 Gew.-%, bevorzugt 4 bis 10 Gew.-% Polyepoxid-, Polyether-, Polyolefin-, Polyvinylacetat-, Polyacrylat- oder Polyurethanharzen oder Mischungen davon,
b) 0,1 bis 10 Gew.-%, bevorzugt 0,3 bis 2 Gew.-% monomeren organofunktionellen Silanen mit einer Alkoxysilangruppe pro Molekül mit ein, zwei oder drei Alkoxyresten (Alkoxy ist bevorzugt C₁-C₆-Alkoxy und C₅-C₁₀-Cycloalkoxy),
c) 0,1 bis 10 Gew.-%, bevorzugt 0,3 bis 2 Gew.-% wasserlöslichen oder- dispergierbaren, oligomeren oder polymeren aminofunktionellen Silanverbindungen mit mehr als einer Alkoxysilangruppe pro Molekül mit jeweils ein, zwei oder drei Alkoxyresten pro Silangruppe (Alkoxy ist bevorzugt C₁-C₆-Alkoxy und C₅-C₁₀-Cycloalkoxy) und einem mittleren Molekulargewicht von > 500 g/mol,
d) 0 bis 10 Gew.-%, bevorzugt 0,1 bis 5 Gew.-% weiteren üblichen Schlichtebestandteilen ,
e) 0 bis 10 Gew.-%, bevorzugt 0 bis 5 Gew.-% Zusätzen zur Einstellung des pH-Wertes zwischen 3 und 10 und
f) Wasser als Rest auf 100 Gew.-%
versehen, anschließend geschnitten und getrocknet.

In der Schlichte können weitere Komponenten wie Emulgatoren, weitere filmbildende Harze, weitere Haftvermittler, Gleitmittel, pH-Puffersubstanzen und Hilfsstoffe wie Netzmittel oder Antistatika enthalten sein.

Die weiteren Haftvermittler, Gleitmittel und sonstigen Hilfsstoffe, Verfahren zur Herstellung der Schlichten, Verfahren zur Beschlichtung und Nachbearbeitung der Glasfasern sind bekannt und beispielsweise in K.L. Loewenstein, "The Manufacturing Technology of Continuous Glass Fibres", Elsevier Scientific Publishing Corp., Amsterdam. London, New York, 1983, beschrieben.

Die Glasfasern können über beliebige Methoden beschlichtet werden, beispielsweise mit Hilfe geeigneter Vorrichtungen, wie z.B. Sprüh- oder Walzenapplikatoren. Auf die mit hoher Geschwindigkeit aus Spinndüsen gezogenen Glasfilamente können beispielsweise sofort nach ihrem Erstarren, d.h. noch vor dem Aufwickeln oder Schneiden, Schlichten aufgetragen werden. Es ist aber auch möglich, die Fasern im Anschluss an den Spinnprozess in einem Tauchbad zu beschlichten.

Als Polyepoxid-Filmbildner sind wasserdispergierte, emulgierte oder in Wasser gelöste Epoxidharze geeignet. Es handelt sich dabei um unmodifizierte oder durch Amine, saure Gruppen oder hydrophil-nichtionische Gruppen modifizierte Epoxidharze auf der Basis von Diglycidylethern zweiwertiger Phenole wie Brenzkatechin, Resorcin, Hydrochinon, 4,4'-Dihydroxydiphenyldimethylmethan (Bisphenol A), 4,4'-Dihydroxy-3,3'-dimethyl-diphenylpropan, 4,4'-Dihydroxydiphenylsulfon, Glycidylethern zweiwertiger, aromatischer, aliphatischer und cycloaliphatischer Carbonsäuren wie beispielsweise Phthalsäureanhydridbisglycidylether oder Adipinsäurebisglycidylether, Glycidylethern zweiwertiger, aliphatischer Alkohole wie Butandiolbisglycidylether, Hexandiolbisglycidylether oder Polyoxyalkylenglykolbisglycidylether sowie Polyglycidylethern polywertiger Phenole, beispielsweise von Novolaken (Umsetzungsprodukte von ein oder mehrwertigen Phenolen mit Aldehyden, insbesondere Formaldehyd, in Gegenwart saurer Katalysatoren), Tris-(4-hydroxyphenyl)methan oder 1,1,2,2-Tetra(4-hydroxyphenyl)ethan, Epoxid-Verbindungen auf der Basis von aromatischen Aminen und Epichlorhydrin, beispielsweise von Glycerin, Trimethylolpropan, Pentaerythrit und weiteren Glycidylverbindungen wie Trisglycidylisocyanurat. Als chemische Modifizierungen ist beispielsweise die Addition von Aminen oder die Addition von hydrophilen Polyethern, z.B. Polyethylcnglykolen geeignet. Geeignete Polyepoxid-Dispersionen sind z.B. in EP-A 27 942, EP-A 311 894, US 3 249 412, US 3 449 281, US 3 997 306 und US 4 487 797 beschrieben. Bevorzugt werden in Wasser dispergierte, emulgierte oder gelöste Polyesterepoxide auf Basis von Bisphenol A und Novolaken.

Polyurethan-Filmbildner sind in Wasser dispergierte, emulgierte oder gelöste Reaktionsprodukte von bevorzugt difunktionellen Polyisocyanaten mit bevorzugt difunktionellen Polyolen und gegebenenfalls bevorzugt difunktionellen Polyaminen. Die Synthese von Polyurethan-Dispersionen, verwendbare Bausteine, die Herstellverfahren und ihre Eigenschaften sind dem Fachmann bekannt und beispielsweise in Houben-Weyl "Methoden der organischen Chemie", Band E 20, herausgegeben von H. Bartl und J. Falbe, Georg Thieme Verlag Stuttgart, New York 1987 auf den Seiten 1587 bis 1604, 1659 bis 1681, 1686 bis 1689 beschrieben.

Geeignete Isocyanate sind aliphatische, cycloaliphatische, araliphatische, aromatische und heterocyclische Polyisocyanate oder beliebige Gemische dieser Polyisocyanate, wie z.B. 1,6-Hexamethylendiisocyanat, 1-Isocyanato-3,3,5-trimethyl-5-isocyanatomethyl-cyclohexan, 2,4- und 2,6-Toluylendiisocyanat, Diphenylmethan-2,4'- und/oder -4,4'-diisocyanat.

Geeignete Polyole sind Polyester, also z.B. Umsetzungsprodukte von vorzugsweise zweiwertigen Polyalkoholen wie z.B. Ethylenglykol, Propylenglykol, Butylenglykol und Hexandiol mit vorzugsweise zweiwertigen Polycarbonsäuren oder deren veresterungsfähigen Derivaten wie z.B. Bernsteinsäure, Adipinsäure, Phthalsäure, Phthalsäureanhydrid, Maleinsäure und Maleinsäueranhydrid. Auch Polyester aus Lactonen, z.B. ε-Caprolactam sind einsetzbar. Polyester können auch anteilig drei- wertige Alkohole oder Carbonsäurekomponenten wie z.B. Trimethylolpropan oder Glycerin enthalten. Weiterhin sind verzweigte oder unverzweigte Polyether geeignet, hergestellt z.B. durch Polymerisation von Epoxiden wie z.B. Ethylenoxid, Propylenoxid oder Tetrahydrofuran mit sich selbst oder durch Anlagerung der Epoxide an Startkomponenten mit reaktionsfähigen Wasserstoffatomen wie Wasser, Alkohole, Ammoniak oder Amine.

Als sogenannte Kettenverlängerer, d.h. vorzugsweise difunktionelle Polyole oder Polyamine mit einem Molekulargewicht von kleiner als 400, werden besonders bevorzugt zweiwertige Polyalkohole wie Ethylenglykol, Propylenglykol, Butylenglykol, Aminoalkohole wie Ethanolamin, N-Methyldiethanolamin sowie difunktionelle Polyamine wie z.B.Ethylendiamin,1,4-Tetramethylendiamin, Hexamethylendiamin, 1-Amino-3,3,5-trimethyl-5-aminomethylcyclohexan, Bis-(3-aminopropyl) methylamin und Hydrazin eingesetzt.

Auch Epoxidgruppen oder verkappte Isocyanatgruppen (siehe z.B. EP-A 137 427) aufweisende Polyurethan-Dispersionen, -Emulsionen oder -Lösungen sind geeignet.

Polyester-Dispersionen sind bevorzugt Umsetzungsprodukte aus den vorgenannten Polyepoxiden mit den vorgenannten Polycarbonsäuren, bzw. carboxylgruppenhaltigen Polyestern (siehe z.B. EP-A 27 942), die keine Epoxidgruppen mehr enthalten.

Geeignete monomere organofunktionelle Silane (b) sind beispielsweise 3-Aminopropyltrimethoxysilan, 3-Aminopropyltriethoxysilan, 3-Aminopropyltris-methoxyethoxysilan, 3-Aminopropyl-methyl-diethoxysilan, N-Methyl-2-Aminoethyl-3-aminopropyltrimethoxysilan, N-Methyl-2-Aminoethyl-3-aminopropyl-methyl-dimethoxysilan, N-Methyl-3-aminopropyltrimethoxysilan, 3-Glycidyloxypropyltrimethoxysilan, 3-Methacryloxypropyltrimethoxysilan, 3-Mercaptopropyltrimethoxysilan, Vinyltriethoxysilan und Vinyltrimethoxysilan.

Als Komponente (c) geeignete oligomere oder polymere aminofunktionelle Silanverbindungen sind z.B. unvernetzte, lösliche, lineare Harnstoff-Oligomere und -Polymere mit freien endständigen Aminogruppen und seitenständigen Alkoxysilangruppen, die in organischer Lösung lagerstabil sind, und die in wässrigen Lösungsmitteln stabile Lösungen ergeben. Insbesondere die Kombination von freien Aminogruppen, Hamstoffgruppen und mehr als einer Alkoxysilangruppe pro Molekül führt dabei zu herausragenden Eigenschaften der Schlichte.

Bevorzugt sind wasserlösliche, oligomere oder polymere aminofunktionelle Harnstoff-Alkoxy-Silanverbindungen erhältlich durch Reaktion von
a) 1 bis 1,8 Äquivalenten eines Diisocyanates mit
b) 2 Äquivalenten eines Diamins bestehend aus
   b1) 80 bis 100 Gew.-% eines Diaminoalkoxysilans der Formel (I)

      HN(R¹)-Z-N(H)-Y-Si(OR²)₍₃₋ₐ₎R³ ₐ (I)

      wobei
      - Z =: C₁-C₆-Alkylen, C₅-C₁₀-Cycloalkylen oder Arylen,
      - R¹ =: H, C₁-C₆-Alkyl oder C₅-C₁₀-Cycloalkyl,
      - Y =: C₃-C₆-Alkylen,
      - R² =: C₁-C₆-Alkyl oder C₅-C₁₀-Cycloalkyl,
      - a =: 0 bis 2 und
      - R³ =: C₁-C₆-Alkyl oder C₅-C₁₀-Cycloalkyl bedeuten, und
   b2) 0 bis 20 Gew.-% mindestens einer nichtionischen, hydrophilen Verbindung enthaltend Ethergruppen, die pro Molekül zwei gegenüber Isocyanatgruppen reaktionsfähige Gruppen, insbesondere Hydroxylund/oder Aminogruppen, aufweist.

Als Diisocyanate eignen sich bevorzugt aromatische, aliphatische, heterocyclische, monocyclische und polycyclische, bifunktionelle Isocyanatverbindungen.

Als Diisocyanate können vorzugsweise Diisocyanate der Formel (II)

OCN-R-NCO (II)

wobei
- R=: C₁-C₆-Alkylen, C₅-C₁₅-Cycloalkylen, C₆-C₁₄-Arylen, C₇-C₂₀-Arylalkylen oder C₇-C₂₀-Alkylarylen
bedeutet.

Diisocyanate des Typs Ethylendiisocyanat, 1,2 Diisocyanato-propan, 1,3 Diisocyanato-propan, 1,4 Butylendiisocyanat (BDI), 1,6 Diisocyanatohexan (HDI), 1,2 Diisocyanatocyclohexan, 1,3 Diisocyanatocyclohexan, 1,4 Diisocyanatobenzol, Bis(4-isocyanatocyclohexyl)methan (H12MDI), Bis(4-isocyanatocyclohexenyl)methan, Bis(4-isocyanatophenyl)methan (MDI), 2,4 und 2,6 Toluoldiisocyanat (TDI), 1,5 Diisocyanatonaphthalin, hydriertes Toluoldiisocyanat, 1-Isocyanatomethyl-5-isocyanato-1,3,3,trimethyl-cyclohexane (Isophorondiisocyanat, IPDI), 1,6-Diisocyanato-2,2,4-trimethylhexan sind bevorzugt.

Besonders bevorzugt sind 1,6-Diisocyanatohexan und 1-Isocyanatomethyl-5-isocyanato-1,3,3-trimethylcyclohexan (fsophorondiisocyanat).

Weiterhin können vorzugsweise im Mittel bis-funktionelle Isocyanate, die durch Umsetzung oder Oligomerisierung von Diisocyanaten hergestellt wurden, eingesetzt werden. So können beispielsweise bevorzugt Allophanat-, Uretdion- oder Biuretgruppenhaltige Produkte (wie z.B. Desmodur® N 100 von Bayer AG, Leverkusen) oder partiell trimerisierte Polyisocyanate, welche Iminooxadiazindion- oder Isocyanurat-Ringe aufweisen (wie z.B. Desmodur® N 3400 von Bayer AG) eingesetzt werden.

Besonders geeignete Diaminoalkoxysilane b1) sind N-β-(aminoethyl)-γ-aminopropyltrimethoxysilan (Dynasilan® Damo von Hüls AG), N-β-(aminoethyl)-γ-aminopropyltriethoxysilan, N-β-(aminoethyl)-γ-aminopropylmethyldimethoxysilan, N-β-(aminoethyl)-N-β-(aminoethyl)-γ-aminopropyltrimethoxysilan:

(CH₃-CH₂-O)₃Si-CH₂-CH₂-CH₂-NH-CH₂-CH₂-NH₂

(CH₃O)₃Si-CH₂CH₂CH₂-NH-CH₂CH2-NH₂

(C₂H₅O)₂(CH₃)Si-CH₂CH₂CH₂-(NH-CH₂CH₂)₃-NHCH₂CH₂CH₂-Si(CH₃)(OC₂H₅)₂

(CH₃O)₃Si-CH₂CH₂CH₂-NH-CH₂-C₆H₄-NH-H₂CH₂-Si(OCH₃)₃

(CH₃O)₂(CH₃)-Si-CH₂CH₂CH₂-NH-CH₂CH₂-NH-CH₂CH₂CH₂-Si(CH₃)(OCH₃)₂

Besonders bevorzugt ist N-β-(aminoethyl)-γ-aminopropyltrimethoxysilan.

Als Verbindungen unter b2) eignen sich besonders gut Verbindungen folgender Formel:

NH₂-(X-0-)ₐ-V-NH₂

wobei
- X: C₁-C₆-Alkylen, verzweigt oder unverzweigt,
- a: 1 bis 100 und
- V: C₁-C₆-Alkylen, verzweigt oder unverzweigt, bedeuten.

Die Polyetherketten dieser Verbindungen bestehen bevorzugt zumindest zu 80 Gew.-%, besonders bevorzugt 100 Gew.-%, aus Ethylenoxideinheiten, wobei neben diesen auch Propylenoxideinheiten vorliegen können. Bevorzugte nichtionische hydrophile Verbindungen sind beispielsweise Polyethylenglykole mit Molckulargewichten von 300 bis 6 000 (z.B. Carbowax®300, 400, 1000, 1500, 2000, 6000 von Union Carbide), difunktionelle Etherdiamine, wie z.B. 4,7-Dioxadecan-1,10-diamin,4,9-Dioxadodecan-1,12-diamin, 4,7,10-Trioxadecan-1,13-diamin, Bis-(3-aminopropyl)-polytetrahydrofuran, Bis-(3-aminopropyl)-polytetrahydrofuran, Bis-(3-aminopropyl)-polytetrahydrofuran (Produkte Carbowax ®750, 1100, 2100 von BASF)sowie Polyetheramine (z.B. Jeffamine®D 230, D 400, D 2000, XTJ 510 (D 4 000), ED 600, ED 900, ED 2003, ED 4000, EDR 148 (XTJ 504) von Texaco Chemical Company).

Ganz besonders bevorzugt sind folgende difunktionelle Etherdiamine: 4,7-Dioxadecan-1,10-diamin; 4,9-Dioxadodecan-1,12-diamin; 4,7,10-Trioxadecan-1,13-diamin;Bis-(3-aminopropyl)-polytetrahydrofuran 750, Bis-(3-aminopropyl)-polytetrahydrofuran 1 100, Bis-(3-aminopropyl)-polytetrahydrofuran 2 100 von BASF und Jeffamine®D 230, D 400, D 2 000, XTJ 510 (D 4000), ED 600, ED 900, ED 2003, ED 4000, EDR 148 (XTJ504) von Texaco Chemical Company.

Als Komponente (c) geeignete oligomere oder polymere aminofunktionelle Silanverbindungen sind des weiteren Oligoamino-Amid-Silane wie A1387 der Fa. Witco oder oligomere oder polymere aminofunktionelle Harnstoff-Alk-oxysilanverbindungen.

Zusätzlich können weitere Schlichtekomponenten (d) wie anionische, kationische oder nichtionische Emulgatoren, weitere filmbildende Harze, Gleitmittel wie z.B. Polyalkylenglykolether von Fettalkoholen oder Fettaminen, Polyalkylenglykolester und Glycerinester von Fettsäuren mit 12 bis 18 C-Atomen, Polyalkylenglykole höherer Fettsäureamide mit 12 bis 18 C-Atomen und/oder Alkenylaminen, quartäre Stickstoffverbindungen z.B. ethoxylierte lmidazoliniumsalze, Mineralöle oder Wachse und Hilfsstoffe wie Netzmittel oder Antistatika wie z.B. Lithiumchlorid oder Ammoniumchlorid in den Schlichten enthalten sein. Diese weiteren Hilfsstoffe sind dem Fachmann bekannt und beispielsweise in K.L. Loewenstein, "The Manufacturing Technology of Continuous Glass Fibres", Elsevier Scientific Publishing Corp., Amsterdam, London, New York, 1983, beschrieben.

Die erfindungsgemäßen Glasfasern sind als Verstärkungsfasern für thermoplastische Polymere wie z.B. Polycarbonate, Polyamid-6 und Polyamid-6,6, aliphatische, aromatische und gemischt aliphatisch/aromatische Polyesteramide, aliphatische, aromatische und gemischt aliphatisch/aromatische Polyester wie z.B. Polyethylenterephthalat und Polybutylenterephthalat, Polyurethane, Polyarylensulfide oder Polycycloolefine sowie duroplastische Polymere wie ungesättigte Polyesterharze, Epoxidharze und Phenol-Formaldehydharze geeignet.

Die Erfindung soll anhand der nachfolgenden Beispiele näher erläutert werden:

### Beispiele

### Beispiel 1 (Vergleich):

Die Schlichte (siehe Tabelle 1) wurde über einen Kiss-Roll-Applikator auf Glasfasern mit einem Durch-messer von 14 µm aufgebracht. Die Glasfasern wurden zu Cakes aufgewickelt und anschließend 10 Stunden bei 130°C getrocknet. Die Glasfasem wurden nach der Trocknung in 4,5 mm lange Chops geschnitten.

### Beispiel 2 (Vergleich):

Die gleiche Schlichte wie in Beispiel 1 (siehe Tabelle 1) wurde über einen Kiss-Roll-Applikator auf die Glasfasern mit einem Durchmesser von 14 µm appliziert. Die Glasfasern wurden direkt nach dem Applikator im Direkt Chopper geschnitten und anschließend 10 Stunden bei 130°C getrocknet.

Die Glasfasern gemäß Beispiel 1 und 2 wurden auf einem Extruder bei einer Extrudertemperatur von 250°C zu einer Formmasse bestehend aus 70 Gew.-Teilen Polyamid 6 (Durethan®, Handelsprodukt der Fa. Bayer AG, Leverkusen) und 30 Gew.-Teilen Glasfaser aus Beispiel 1 bzw. Beispiel 2 extrudiert und granuliert.

Von den Formmassen wurden auf einer üblichen Spritzgussmaschine 80 x 10 x 4 mm-Prüf- und Zugstäbe hergestellt. Geprüft wurden Biegefestigkeit nach DIN 53452, Zugfestigkeit nach DIN 53455 sowie die Schlagzähigkeit bei Raumtemperatur nach Izod (ISO 180/IC).

Die Ergebnisse sind der Tabelle 2 zu entnehmen.

**Tabelle 1**

| Schlichtekomponenten | Mengenangaben in Gew.-% | |
|---|---|---|
| | Beispiel 1 | Beispiel 2 |
| Polyurethan-Dispersion Baybond® PU 0401 (Handelsprodukt der Fa. Bayer AG ) | 4 | 4 |
| 3-Aminopropyltriethoxysilan | 1 | 1 |
| Gleitmittel (Polyalkylenglykol) | 0,5 | 0,5 |
| Wasser | 94,5 | 94,5 |
| Schlichteauftrag (Bestimmung durch Glühverlust) | 0,70 | 0,70 |

**Tabelle 2**

| Formmasse mit | Biegefestigkeit in [Mpa] | Zugfestigkeit in [Mpa] | Schlagzähigkeit in [kJ/m²] |
|---|---|---|---|
| Glasfasern aus Beispiel 1 | 180 | 276 | 56 |
| Glasfasern aus Beispiel 2 | 165 | 257 | 46 |

### Beispiel 3

Die Schlichten bestanden aus den Komponenten gemäß Tabelle 3 und wurden über einen Kiss-Roll-Applikator auf Glasfasern mit einem Durchmesser von 11 µm aufgebracht. Die Glasfasern wurden anschließend im Direct Chopper geschnitten und anschließend bei 130°C getrocknet.

**Tabelle 3**

| | **Beispiele** | | | | | |
|---|---|---|---|---|---|---|
| Schlichtekomponente (Mengenangaben in Gew. %) | *3.1.* | *3.2.* | *3.3.* | *3.4.* | *3.5.* | *3.6.* |
| 3 Aminopropyltriethoxysilan (A 1100, Handelsprodukt der Fa. Witco,USA) | 1 | 1 | 1 | 1 | 1 | 1 |
| Polyamino-amidsilan (A1387, Handelsprodukt der Fa. Witco) | - | - | - | 0,5 | 0,5 | 0,5 |
| Polyurethandispersion (Baybond® PU 0401, Handelsprodukt der Fa. Bayer AG) | 4 | 4 | 4 | 4 | 4 | 4 |
| Gleitmittel (Polyalkylenglykol) | 0,5 | 0,5 | 0,5 | 0,5 | 0,5 | 0,5 |
| Wasser | 94,5 | 94,5 | 94,5 | 94 | 94 | 94 |
| pH-Wert Säure | pH5 CH₃COOH | pH7 CH₃COOH | pH7 HCOOH | pH5 CH₃COOH | pH7 CH₃COOH | pH7 HCOOH |

### Beispiel 4

70 Gew.-Teile Polyamid 6 (Durethan®, Fa. Bayer AG) und 30 Gew.-Teile Glasfasern aus den Beispielen 3.1, 3.2, 3.3, 3.4, 3.5 und 3.6 wurden auf einem Extruder bei einer Extrudertemperatur von 250°C zu einer Formmasse extrudiert und granuliert. Von den Formmassen wurden auf einer üblichen Spritzgussmaschine 80 x 10 x 4 mm-Prüf- und Zugstäbe hergestellt. Geprüft wurden Biegefestigkeit nach DIN 53 452, Zugfestigkeit nach DIN 53 455 sowie die Schlagzähigkeit bei Raumtemperatur nach Izod (ISO 180/IC).

**Tabelle 4**

| **Formmasse mit Glasfasern aus** | **Zugfestigkeit** | **Biegefestigkeit** | **Schlagzähigkeit** |
|---|---|---|---|
| Beispiel 3.1. | 167 | 260 | 52 |
| Beispiel 3.2. | 165 | 261 | 51 |
| Beispiel 3.3. | 166 | 259 | 53 |
| Beispiel 3.4. | 181 | 273 | 59,2 |
| Beispiel 3.5. | 185 | 278 | 61 |
| Beispiel 3.6. | 187 | 280 | 62,9 |

Mit den erfindungsgemäßen Schlichten bzw. den entsprechend beschlichteten Glasfasern wurden glasfaserverstärkte Kunststoffe erhalten, die bezüglich Zug- und Biegefestigkeit und Schlagzähigkeit bessere Eigenschaften aufweisen als entsprechende Kunststoffe, die mit gängigen beschlichteten Glasfasern hergestellt und nach dem kostengünstigeren Direct Chop Verfahren geschnitten wurden.

## Patentansprüche

1. Schlichtezusammensetzung für Glasfasern mit einem pH-Wert zwischen 3 und 10 bestehend aus:
a) 0,1 bis 20 Gew.-%, bevorzugt 4 bis 10 Gew.-% Polyepoxid-, Polyether-, Polyolefin-, Polyvinylacetat-, Polyacrylat- oder Polyurethanharzen oder Mischungen davon als Filmbildner,
b) 0,1 bis 10 Gew.-%, bevorzugt 0,3 bis 2 Gew.-% monomeren organofunktionellen Silanen mit einer Alkoxysilangruppe pro Molekül, die ein, zwei oder drei Alkoxyreste aufweist, als Haftvermittler
c) 0,1 bis 10 Gew.-%, bevorzugt 0,3 bis 2 Gew.-% wasserlöslichen oder dispergierbaren, oligomeren oder polymeren aminofunktionellen Silanverbindungen mit mehr als einer Alkoxysilangruppe pro Molekül, die jeweils ein, zwei oder drei Alkoxyreste aufweist, und einem mittleren Molekulargewicht von > 500 g/mol,
d) 0 bis 10 Gew.-%, bevorzugt 0,1 bis 5 Gew.-% weiteren üblichen Schlichtebestandteilen und
e) 0 bis 10 Gew.-%, bevorzugt 0 bis 5 Gew.-% Zusätzen zur Einstellung des pH-Wertes zwischen 3 und 10 und
f) Wasser als Rest auf 100 Gew.-%.

2. Schlichtezusammensetzung gemäß Anspruch 1, **dadurch gekennzeichnet, dass** das Verhältnis von Komponente b) zur Komponente c) 2:1 ist.

3. Schlichtezusammensetzung gemäß Anspruch 1 oder 2, **dadurch gekennzeichnet, dass** der pH-Wert der Schlichtezusammensetzung zwischen 5 und 9, besonders bevorzugt bei 7 liegt.

4. Schlichtezusammensetzung gemäß einem oder mehreren der Ansprüche 1 bis 3, **dadurch gekennzeichnet, dass** der pH-Wert durch Zugabe von Ameisensäure eingestellt wird.

5. Beschlichtete Glasfasern, **dadurch gekennzeichnet, dass** sie mit einer Schlichtezusammensetzung gemäß den Ansprüchen 1 bis 4 beschlichtet werden.

6. Verwendung der beschlichteten Glasfaser gemäß Anspruch 5 zur Verstärkung von thermo-plastischen und duroplastischen Polymeren.

## Claims

1. A glass fibre sizing composition with a pH of between 3 and 10 consisting of:
a) 0.1 to 20 wt.%, preferably 4 to 10 wt.%, of polyepoxide, polyether, polyolefin, polyvinyl acetate, polyacrylate or polyurethane resins or mixtures thereof as film-forming agents,
b) 0.1 to 10 wt.%, preferably 0.3 to 2 wt.%, of monomeric organofunctional silanes with one alkoxysilane group per molecule, said group comprising one, two or three alkoxy residues, as adhesion promoters,
c) 0.1 to 10 wt.%, preferably 0.3 to 2 wt.%, of water-soluble or -dispersible, oligomeric or polymeric amino-functional silane compounds with more than one alkoxysilane group per molecule, said groups in each case comprising one, two or three alkoxy residues, and an average molecular weight of > 500 g/mol,
d) 0 to 10 wt.%, preferably 0.1 to 5 wt.%, of further conventional size constituents and
e) 0 to 10 wt.%, preferably 0 to 5 wt.%, of additives for adjusting the pH to between 3 and 10 and
f) water as the remainder to make up to 100 wt.%.

2. A sizing composition according to claim 1, **characterised in that** the ratio of component b) to component c) is 2:1.

3. A sizing composition according to claim 1 or 2, **characterised in that** the pH of the sizing composition is between 5 and 9, particularly preferably 7.

4. A sizing composition according to one or more of claims 1 to 3, **characterised in that** the pH is adjusted by addition of formic acid.

5. Sized glass fibres, **characterised in that** they are sized with a sizing composition according to claims 1 to 4.

6. Use of the sized glass fibres according to claim 5 for reinforcing thermoplastic and thermosetting polymers.

## Revendications

1. Composition d'enduction pour fibres de verre avec un pH entre 3 et 10 composé de:
a) 0,1 à 20 % en poids, de préférence 4 à 10 % en poids de résines de polyépoxyde, de polyéther, de polyoléfine, de polyvinylacétate, de polyacrylate ou de polyuréthane ou des mélanges de celles-ci comme agent filmogène;
b) 0,1 à 10% en poids, de préférence 0,3 à 2% en poids de silanes monomères organofonctionnels avec un radical alcoxysilane par molécule qui présente ou un, deux ou trois radicaux alcoxy comme agent adhésif;
c) 0,1 à 10% en poids, de préférence 0,3 à 2% en poids de composés de silanes aminofonctionels oligomères ou polymères, hydrosolubles ou dispersibles avec plus d'un radical alcoxysilane par molécule qui présente respectivement un, deux ou trois radicaux alcoxy et un poids moléculaire moyen de > 500 g/mole,
d) 0 à 10% en poids, de préférence 0,1 à 5% en poids d'autres composants habituels d'enduction et
e) 0 à 10% en poids, de préférence 0 à 5% en poids d'additifs pour le réglage du pH entre 3 et 10 et
f) de l'eau pour atteindre 100 % en poids.

2. Composition d'enduction selon la revendication 1, **caractérisée en ce que** le rapport du composant b) au composant c) est de 2:1.

3. Composition d'enduction selon l'une des revendications 1 ou 2, **caractérisée en ce que** le pH de la composition d'enduction se situe entre 5 et 9, de préférence à 7.

4. Composition d'enduction selon l'une ou plusieurs des revendications 1 à 3, **caractérisée en ce que** le pH est réglé par addition d'acide formique.

5. Fibres de verre enduites, **caractérisées en ce qu'**elles sont enduites d'une composition d'enduction selon les revendications 1 à 4.

6. Mise en oeuvre des fibres de verre enduites selon la revendication 5 pour le renforcement de polymères thermoplastiques et duroplastiques.
